# EUROPEAN PATENT APPLICATION

(11) **EP 4 699 865 A1**
(43) Date of publication of application: **25.02.2026**
(21) Application number: 25197272.5
(22) Date of filing: 21.08.2025
(51) Int. Cl.: B60Q 3/60, B60Q 3/217, B60Q 3/225, B60Q 3/30, B60Q 3/76, B60Q 1/32, B60Q 3/53

(54) **VEHICLE WITH INTERIORS PROVIDED WITH MODULAR LED LIGHTING DEVICES**

(30) Priority: 23.08.2024 IT 202400019192
(71) Applicant: FERRARI S.p.A., 41100 Modena (IT)
(72) Inventor: CARDILLI, Maria Carmela, 41100 MODENA (IT); DUSINI, Luca, 41100 MODENA (IT); NICOLETTA, Epifanio Alberto, 41100 MODENA (IT); RIPA BUSCHETTI DI MEANA, Gabriele, 41100 MODENA (IT); LORENZONI, Massimiliano, 41100 MODENA (IT)
(74) Representative: Studio Torta S.p.A.

(57) **Abstract**

The interiors of a vehicle are provided with at least two LED lighting devices (6a, 6b, 6c) configured to emit respective light beams (7a, 7b , 7c), different from each other; the LED lighting devices (6a,6b 6c) have respective support bodies (41) that are equal to each other and support an electronic board (44) with a LED (45), and respective lenses (42) that are configured to concentrate the light of the corresponding LED (45) and are also equal to each other; the LED lighting devices (6a,6b,6c) have respective outer lenses (10a,10b,10c) that are positioned so as to receive the light of the corresponding lenses (42) and are different from each other so as to define the characteristics of the respective light beams (7a,7b,7c).

## Description

### CROSS-REFERENCE TO RELATED APPLICATIONS

This patent application claims priority from Italian patent application no. 102024000019192 filed on August 23, 2024, the entire disclosure of which is incorporated herein by reference.

### TECHNICAL FIELD

The invention relates to the field of vehicles, whose interiors are provided with LED lighting devices, for example located in the passenger compartment, in side walls of the luggage compartment, in storage compartments, in interior trims of the doors or of the tailgate, etc..

### PRIOR ART

In the automotive industry, in particular when dealing with cars, the lighting of the passenger compartment, of the luggage compartment, of storage compartments, etc. is typically obtained by means of dedicated LED lighting devices.

In other words, the lighting device is designed and produced separately from the other LED devices mounted on the same vehicle, depending on the properties of the light beam to be projected. These properties basically include: the position from which the light beam must be emitted, namely the position where the lighting device must be installed; the angle of opening/emission of the light beam; the inclination of the light beam relative to an axis in which the intensity of the light emitted by the LED is maximum.

As a consequence, along the lines where the vehicle interiors are assembled, each LED lighting device is identified by its own distinct identification number, requires a supply and a dedicated storage area and usually also requires dedicated installation techniques and instructions, based on the specific construction characteristics and dimensions of the device.

The substantial differences between the various lighting devices used in the vehicle interiors obviously result in lengthy design, procurement, storage and installation times, consequently leading to potentially significant costs.

Therefore, these times and costs need to be reduced, by standardizing and, where possible, making the features of the lighting devices modular, while still meeting the various requirements concerning the properties of the light beams to be projected.

Hence, the object of the invention is to fulfil the need discussed above, preferably in a simple and effective fashion.

### SUMMARY OF THE INVENTION

The aforesaid object is reached by a vehicle according to claim 1.

The dependent claims define special embodiments of the invention.

### BRIEF DESCRIPTION OF THE DRAWINGS

The invention will be best understood upon perusal of the following description of preferred embodiments, which is provided by mere way of non-limiting example and with reference to the accompanying drawings, wherein:
- figure 1 is a perspective view of a preferred embodiment of the vehicle according to the invention, with an open door to show a light beam projected from the vehicle interiors;
- figures 2 to 5 show various details of the vehicle interiors of figure 1, with other light beams projected;
- figures 6 and 7 are an overall perspective view and an exploded perspective view, respectively, of a LED lighting device configured so as to emit the light beams indicated in figures 1 to 5;
- figure 8 is cross section, on a larger scale, of a component of the LED lighting device of figure 7;
- figures 9 and 10 show, in a perspective view and in a cross sectional view, respectively, an outer lens of the LED lighting device according to a first version;
- figures 11 and 12 are similar to figures 9 and 10, respectively, and show a second version of the outer lens; and
- figures 13 and 14 are similar to figures 9 and 10, respectively, and show a third version of the outer lens.

### DETAILED DESCRIPTION OF PREFERRED EMBODIMENTS OF THE INVENTION

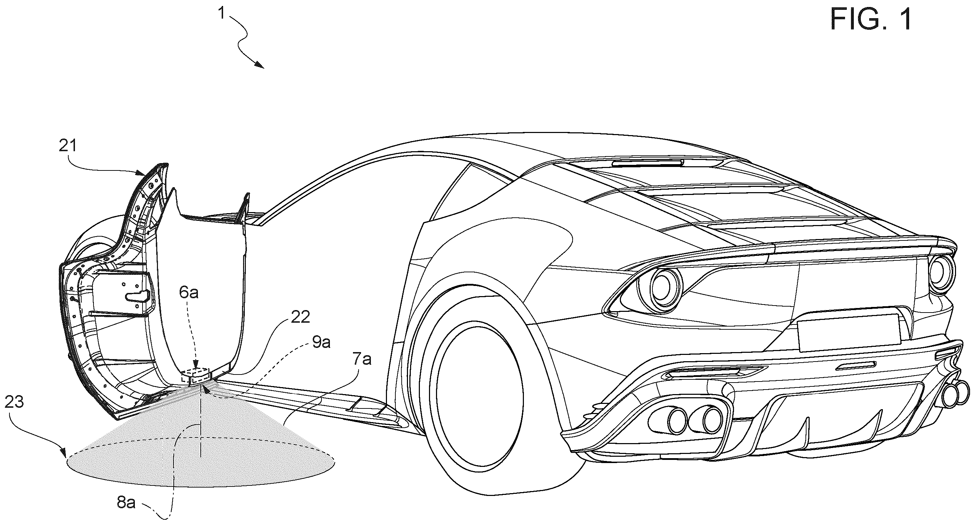

In figures 1 to 5, reference number 1 indicates a vehicle, in particular a car, having interiors that are provided with a plurality of LED lighting devices, which, in the preferred example shown herein, are indicated by reference numbers 6a, 6b, 6c, 6d and 6e, respectively.

The term "interiors" indicates all those components arranged towards the inside of the vehicle 1, when the latter is in a driving condition; specifically, these components can be defined by trims, cover walls, fabrics, structures made of plastic material, elastomer or composite material, etc. that cover, towards the inside, body parts of the vehicle 1. However, more in general, the term "interiors" can also be understood as uncovered body parts, always facing the inside of the vehicle 1 when the latter is in driving conditions.

With reference to figure 1, the vehicle 1 comprises a side door 21, which is shown in an open position (hence, in an operating condition different from the driving condition indicated above) and has a lower wall 22 where the LED lighting device 6a is mounted. The latter is arranged in a position such as to project a light beam 7a downwards along an axis 8a, in order to illuminate an area of the road surface 23 next to the vehicle 1, approximately under the same side door 21, thus facilitating the exit of the driver or the passenger in conditions of poor external lighting (for example, in order to highlight the presence of possible puddles next to the vehicle 1). In particular, the light beam 7a is defined by a light cone, whereby it has an axial symmetry.

The LED lighting device 6a has an outer surface 9a, from which the light beam 7a is emitted. Preferably, the LED lighting device 6a is recessed in the door 21 so that the outer surface 9a is flush with an outer surface of the lower wall 22.

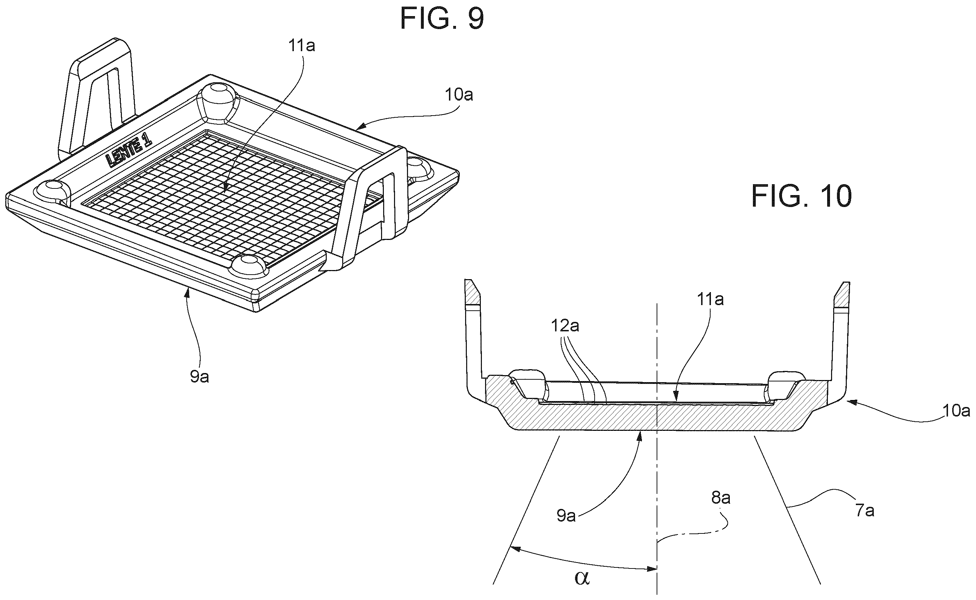

The outer surface 9a is defined by an outer lens 10a, which is made of light-permeable material and is shown in figures 9 and 10. The outer lens 10a is configured so as to emit the light beam 7a with a predefined opening/emission angle, which is symmetrical relative to the axis 8a, and with a predefined angle of inclination between the axis 8a and the surface 9a. In this specific case, the opening/emission half-angle (α) relative to the axis 8a is 10° and the axis 8a is orthogonal to the outer surface 9a.

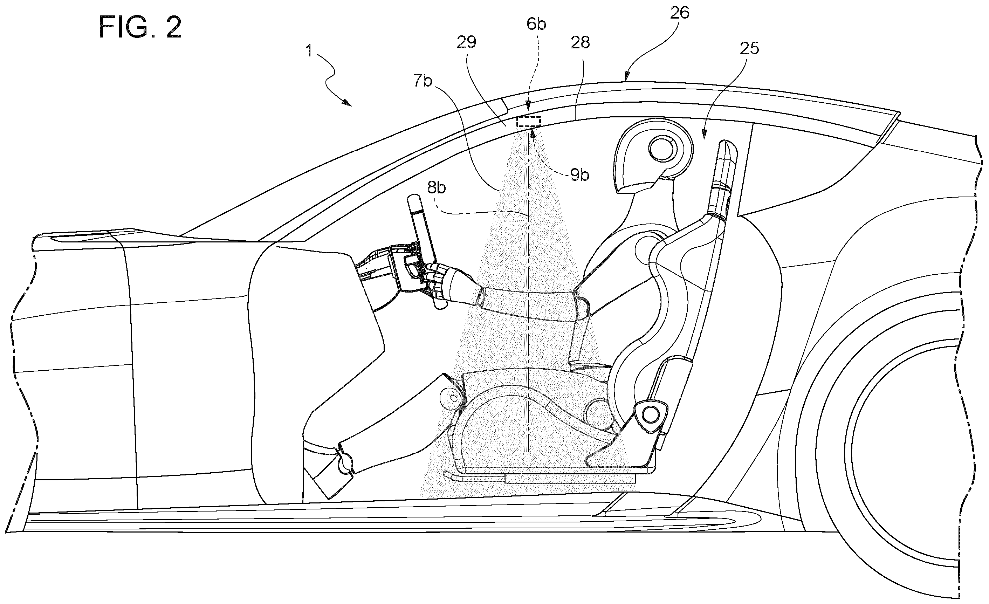

With reference to figure 2, the vehicle 1 comprises a passenger compartment 25 delimited at the top by a roof 26, which has, facing the passenger compartment 25, a lining defined by a headliner 28 and supports a map light 29 comprising the LED lighting device 6b. The latter has an outer surface 9b, from which a light beam 7b is emitted downwards along an axis 8b, in order to illuminate a corresponding area of the passenger compartment 25.

The light beam 7b leaves the outer surface 9b with a predefined opening/emission angle, which is symmetrical relative to the axis 8b, and with a predefined angle of inclination between the axis 8b and the outer surface 9b.

If the opening/emission angles of the light beams 7a and 7b are different from each other and/or if the inclination angles of the axes 8a and 8b are different from each other, the LED lighting device 6b differs from the LED lighting device 6a in that the outer surface 9b is defined by an outer lens different from the outer lens 10a, as described in greater detail below. On the other hand, if there is equality between the opening/emission angles and also between the inclination angles, the outer lens of the LED lighting device 6b is identical to the outer lens 10a.

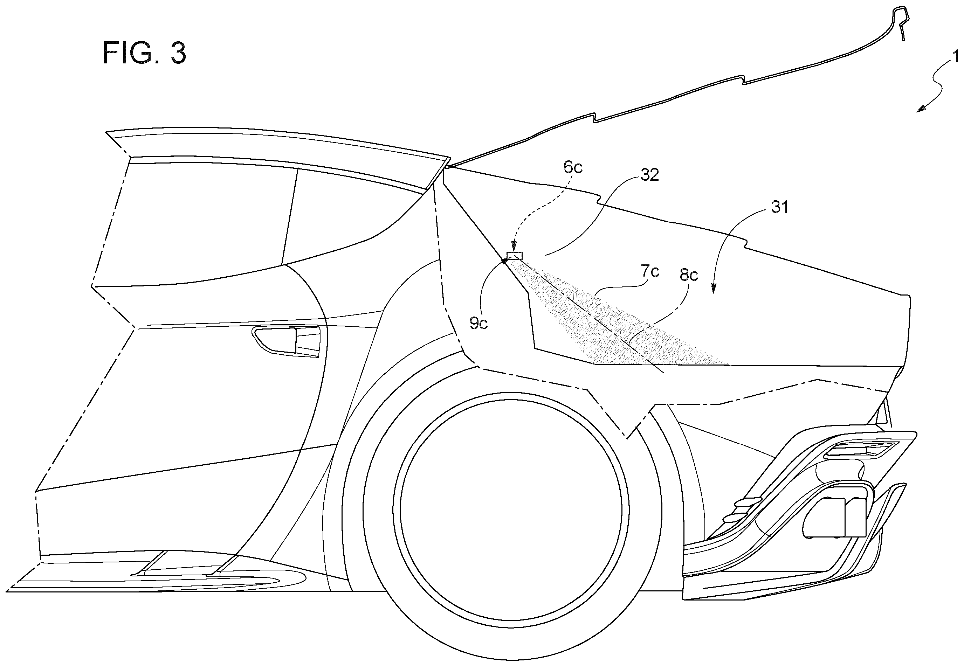

These same considerations about the opening/emission angle and the inclination angle of the light beams can also be applied to the other examples shown in figures 3 to 5.

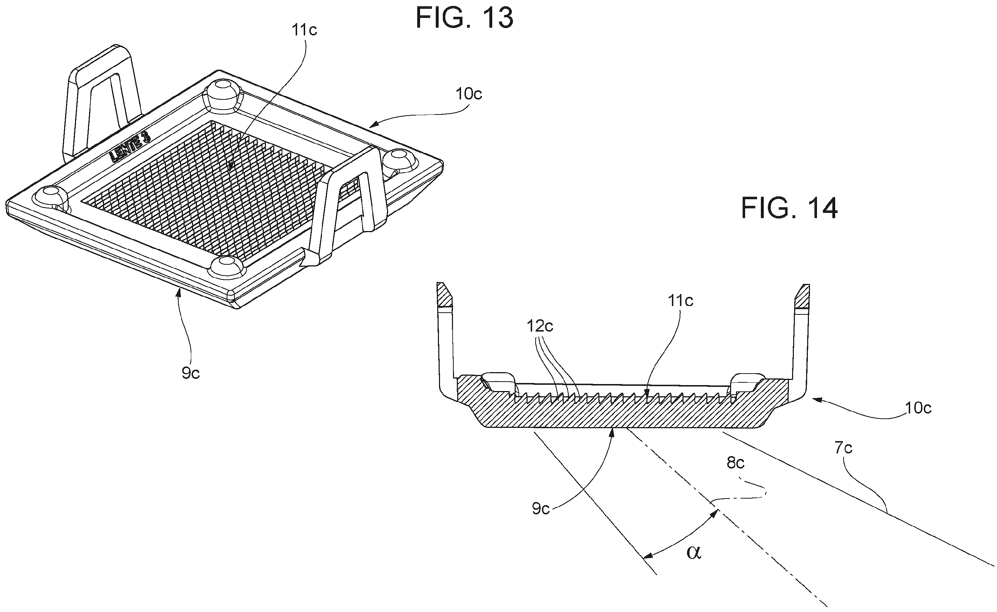

In particular, considering figure 3, the vehicle 1 comprises a luggage compartment 31 delimited by a wall 32, defined for example by a side wall along one of the sides of the vehicle 1, which supports the LED lighting device 6c. The latter has an outer surface 9c, in the area of which a light beam 7c is emitted along an axis 8c, in order to illuminate a corresponding area of the luggage compartment 31. For example, the LED lighting device 6c is recessed in the wall 32 and the outer surface 9c is flush with a surface of the luggage compartment 31. The light beam 7c has a predefined opening/emission angle and the axis 8c has a predefined inclination angle, defined by an outer lens 10c, shown in figures 13 and 14, which is different from the outer lens 9a. In this specific case, the opening/emission half-angle (α) relative to the axis 8b is 10° (namely, the same as the one of the light beam 7a), but the angle of inclination relative to the outer surface 9c is different, for example 65°.

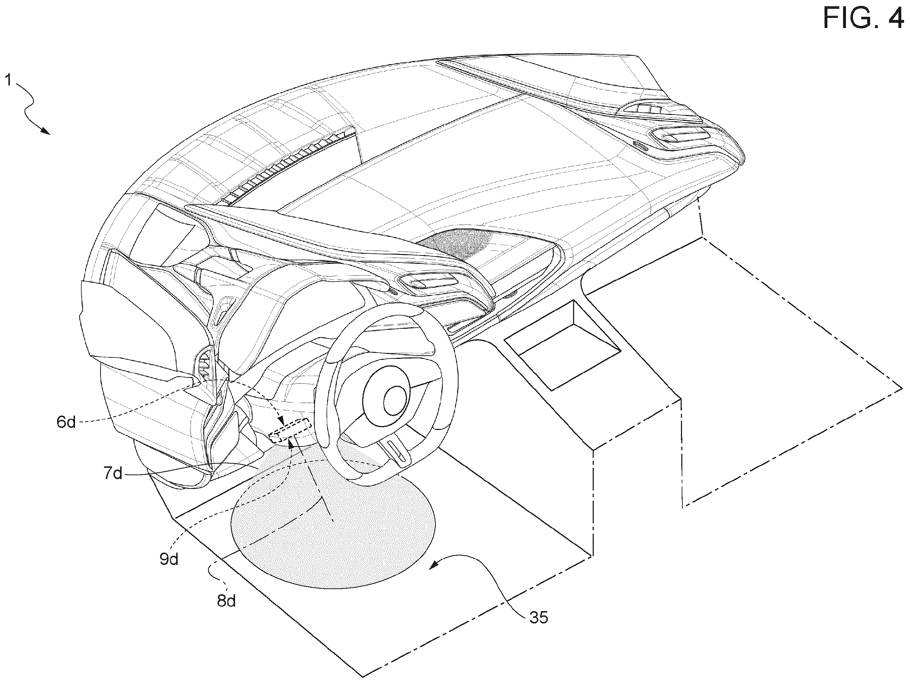

In the example of figure 4, the LED lighting device 6d is arranged in a position such as to illuminate an area of the floor 35 delimiting the passenger compartment 25 at the bottom, in the area of the driver's seat (or of the passenger's seat), for example in order to correctly identify the pedals (not shown) and/or to generate a diffused reflected light in the passenger compartment 25. In the same way as described above, the LED lighting device 6d has an outer surface 9d, in the area of which a light beam 7d is emitted along an axis 8d, with a predefined opening/emission angle and with a predefined inclination angle.

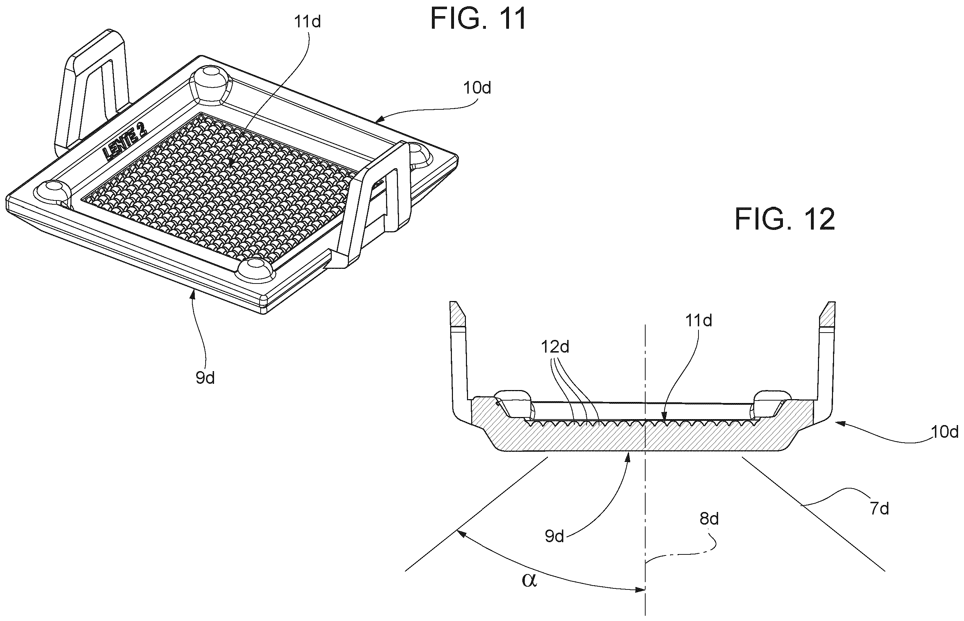

The opening/emission angle and the inclination angle are defined by an outer lens 10d, shown in figures 11 and 12, which is different from the outer lenses 10a and 10b. In particular, the inclination angle of the axis 8d is equal to the one of the axis 8a (namely 90°), but the opening/emission half-angle (α) of the light beam 7d is different, for example 30°.

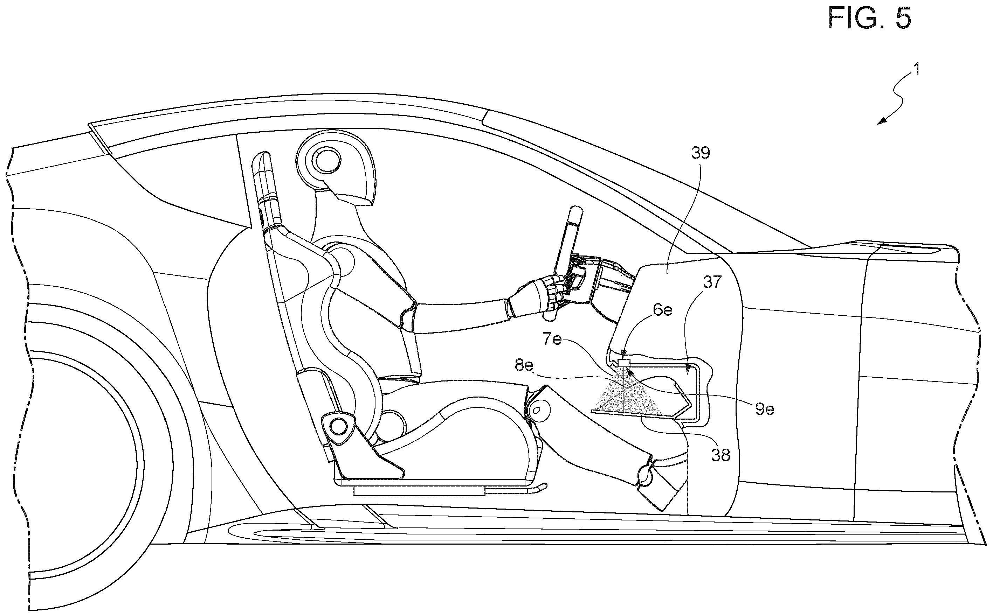

In the example of figure 5, the LED lighting device 6e is arranged in a position such as to illuminate a storage compartment 37, closed by a door 38. For example, the LED lighting device 6d is installed in a dashboard 39 that supports the door 38; however, this lighting also applies to different storage compartments, for example defined by tunnel cabinets, side door trims, etc.. In the same way as described above, the LED lighting device 6e has an outer surface 9e, in the area of which a light beam 7e is emitted along an axis 8e, with a predefined opening/emission angle and with a predefined inclination angle. In this specific case, the opening/emission angle of the light beam 7e and the inclination angle of the axis 8e are the same as those of the outer lens 10a (figures 9 and 10). In particular, the LED lighting device 6e is perfectly identical to the LED lighting device 6a.

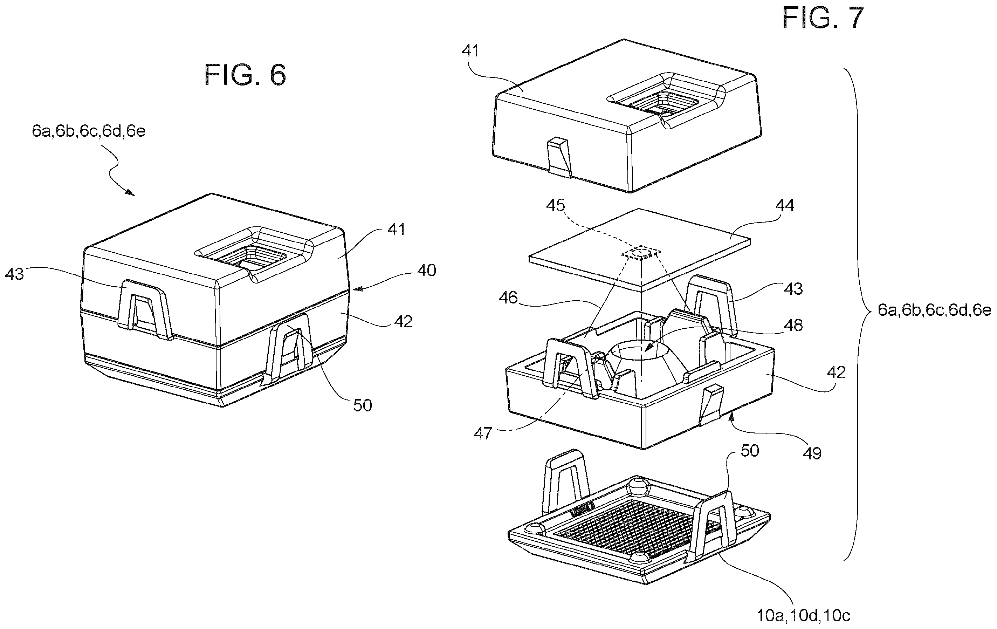

With reference to figures 6 and 7, each one of the LED lighting devices 6a, 6b, 6c, 6d and 6e comprises a common module 40, which is the same for all the devices and comprises, in turn, a support body 41 and a lens 42 directly coupled to each other, in a fixed position, by means of a coupling system 43, for example of the snap-fit type. Hereinafter, the term "directly" means that, in the mutual coupling or positioning, no other bodies are interposed. The coupling system 43 is identical for the various LED lighting devices 6a, 6b, 6c, 6d, 6e, but the type of fixing is irrelevant for the purposes of the invention.

The support body 41 supports an electronic board 44, also called PCB (Printed Circuit Board), which, in turn, supports a LED 45. In particular, the support body 41 is defined by a half-shell that houses the electronic board 44. The led 45 is configured to project a light beam 46 along a symmetry axis 47, which is transverse to the electronic board 44, with a light intensity that is maximum along the axis 47.

Preferably, the electronic board 44 with the LED 45 are also part of the common module 40, namely they are the same for all the LED lighting devices 6a, 6b, 6c, 6d, 6e. If, on the other hand, it is necessary to change the colour and/or light intensity, the LED lighting devices 6a, 6b, 6c, 6d, 6e may comprise electronic boards 44 and/or LEDs 45 that are different from each other.

The lens 42 is defined by a body made of a light-permeable material, which is distinct from the outer lenses (10a, 10d, 10c) and has two surfaces 48 and 49, which are opposite one another. The surface 48 faces the LED and is coaxial to the latter. Preferably, it directly faces the LED 45 (only an air gap is possibly provided between the LED 45 and the surface 48).

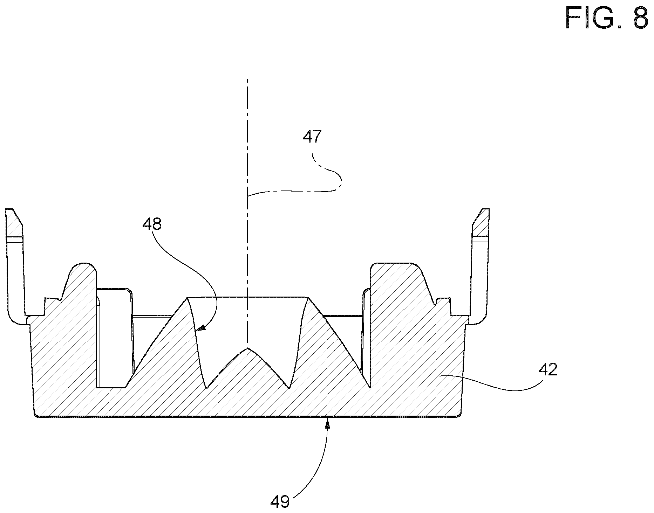

The lens 42 has a suitable shape, for example with axial symmetry, shown by way of non-limiting example in figure 8. This shape is configured to concentrate the light with respect to the light beam 46 received from the LED 45.

The surface 49 preferably is flat (it is therefore the surface 48 that is shaped to deflect and concentrate the light of the LED 45). In particular, the surface 49 is orthogonal to the axis 47.

Preferably, the shape of the lens 42 is such as to collimate the light, namely it is such as to make the light rays coming out of the surface 49 parallel. These rays are orthogonal to the surface 49.

The light leaving the surface 49 is directed towards the outer lens 10a, 10d, 10c. The outer lenses 10a, 10d, 10c have the same outer shape, the same outer dimensions and characteristics such that they can be mounted on the lens 42 alternatively to each other. Each one of the outer lenses 10a, 10d, 10c is directly coupled to the corresponding lens 42, in a fixed position, by means of a coupling system 50, for example of the snap-fit type (the coupling system 50 is identical for the various LED lighting devices 6a, 6b, 6c, 6d and 6e, but the type of fixing is irrelevant for the purposes of the invention).

With reference to figures 9 to 14, each one of the outer lenses 10a, 10d, 10c has a respective surface 11a, 11d, 11c, which is opposite the outer surface 9a, 9d, 9c, for receiving the light emitted by the surface 49. In particular, the surface 11a, 11d, 11c directly faces the surface 49 (only an air gap is possibly provided between the surface 49 and the surface 11a, 11d, 11c).

Preferably, the surface 11a, 11b, 11c is shaped so as to define both the opening/emission angle of the corresponding light beam 7a, 7d and 7c and the inclination angle of the corresponding axis 8a, 8d, 8c. In particular, each one of the surfaces 11a, 11d, 11c consists of a plurality of prisms 12a, 12d, 12c, arranged positions next to one another, for example in the form of a two-dimensional array, and having a shape and dimensions such as to define the opening/emission angle of the corresponding light beam 7a, 7b and 7c and the inclination angle of the corresponding axis 8a, 8b, 8c. The prisms 12a, 12d, 12c are not described in detail, as their characteristics are evident to a person skilled in the art based on the cross sections represented in a simplified manner in figures 10, 12 and 14.

Owing to the above it is evident that the outer lens 10a, 10d, 10c can be assigned the task of defining the opening/emission angle of the corresponding light beam 7a, 7d and 7c and the inclination angle of the corresponding axis 8a, 8d, 8c, without altering all the other components of the LED lighting devices 6a, 6b, 6c, 6d, 6e. In particular, as described above, the support body 41 and the lens 42, together, constitute a common module 40, which remains unchanged for the various lighting devices 6a, 6b, 6c, 6d, 6e.

In other words, one common module 40 is used, which is unique and can possibly be selected from those available on the market, but still managing to cover all the lighting functions of the light beams of the interiors of the vehicle 1 simply by installing the correct outer lens, chosen from a series of available outer lenses (10a, 10d, 10c, or others that define different opening/emission angles and/or different inclination angles).

This modular character implies a standardization of the outer dimensions of the LED lighting devices 6a, 6b, 6c, 6d, 6e, since these dimensions are essentially defined by the support body 41 and by the lens 42. As a result, the installation mode of the different LED lighting devices 6a, 6b, 6c, 6d, 6e in the interiors of the vehicle 1 can also be standardized, thereby simplifying the assembly of such interiors.

In addition, the possibility of choosing and installing the sole outer lens, hence keeping all the rest of the LED lighting devices 6a, 6b, 6c, etc. unchanged, leaves a certain freedom in possibly varying the outer appearance, for example:
- by introducing a different colouring for the outer lens 10a, 10d, 10c, and/or
- by introducing a different surface roughness for the outer surface 9a, 9d, 9c, and/or
- by forming a frame with a different shape and/or a different colour along the perimeter of the outer lens 10a, 10d, 10c, namely around the outer surface 9a, 9d, 9c.

The solution suggested herein is then relatively simple, since each one of the various LED lighting devices 6a, 6b, 6c, etc. has a very small number of components, only one of which changes for the different installation positions available in the vehicle 1.

Other advantages are then evident to a person skilled in the art based on the disclosure offered above.

Finally, the vehicle 1 described with reference to the accompanying drawings can clearly be subjected to changes and variants, without going beyond the scope of protection defined by the appended claims.

In particular, the outer shape and the proportion between the outer dimensions of the LED lighting device 6a, 6b, 6c, etc. could be different from the ones disclosed above by way of example: for example, the LED lighting devices 6a, 6b, 6c, etc. could have a generally cylindrical shape, instead of the parallelepiped one shown herein.

In addition, the concept of varying the outer lens while keeping the support body 41 and the lens 42 unchanged can be applied to LED lighting devices in a different number and/or with different positions from those indicated above.

## Claims

1. Vehicle (1) comprising interiors provided with a first LED lighting device (6a) and at least one second LED lighting device (6d,6c) having, respectively, a first outer surface (9a) and a second outer surface (9d,9c) and configured to emit, respectively
- a first light beam (7a) along a first axis (8a), with a first pre-defined opening angle and with a first predefined inclination angle in relation to said first outer surface (9a), and
- a second beam (7d,7c) along a second axis (8d,8c), with a second pre-defined opening angle and with a second predefined inclination angle in relation to said second external surface (9d,9c);
wherein said first opening angle and said second opening angle are different from each other, and/or said first inclination angle and said second inclination angle are different from each other;
wherein said first LED lighting device (6a) and said second LED lighting device (6d,6c) comprise:
- respective support bodies (41);
- respective electronic boards (44) carried by the support bodies (41) and provided with LEDs (45);
- respective lenses (42) configured to concentrate light and having inlet surfaces (48) facing the LEDs (45) and outlet surfaces (49) opposite said inlet surfaces (48);
**characterized in that**:
- said support bodies (41) are equal to each other;
- said lenses (42) are equal to each other;
- said first LED lighting device (6a) and said second LED lighting device (6d,6c) comprise, respectively, a first outer lens (10a) and a second outer lens (10d,10c), which face the outlet surfaces (49) of said lenses (42), and are different from each other so as to define said first opening angle and said first inclination angle and, respectively, said second opening angle and said second inclination angle.

2. The vehicle according to claim 1, wherein said lenses (42) are configured to emit light rays parallel to each other at said outlet surfaces (49).

3. The vehicle according to claim 1 or 2, wherein said electronic boards (44), with the respective LEDs (45), are equal to each other.

4. The vehicle according to claim 1 or 2, wherein said first outer lens (10a) and said second outer lens (10d,10c) are coupled in a fixed position and directly to the corresponding lenses (42) by means of coupling systems (50) that are equal to each other.

5. The vehicle according to any one of the preceding claims, wherein said lenses (42) are coupled in fixed positions and directly to the corresponding support bodies (41) by means of further coupling systems (43) that are equal to each other.

6. The vehicle according to any one of the preceding claims, wherein the inlet surfaces (48) of said lenses (42) directly face the corresponding LEDs (45).

7. The vehicle according to any one of the preceding claims, wherein said first outer lens (10a) and said second outer lens (10d,10c) have, respectively, a first inner surface (11a) and a second inner surface (11d,11c), which are opposite said outer surfaces (9a,9d,9c) and directly face the outlet surfaces (49) of the corresponding said lenses (42).

8. The vehicle according to any one of the preceding claims, wherein said first outer lens (10a) and said second outer lens (10d,10c) have, respectively, a first inner surface (11a) and a second inner surface (11d,11c), which are opposite said outer surfaces (9a,9d,9c) and are different from each other so as to define said first opening angle and said first inclination angle and, respectively, said second opening angle and said second inclination angle.

9. The vehicle according to claim 8, wherein said outer surfaces (9a,9d,9c) are flat.

10. The vehicle according to claim 8 or 9, wherein each of said first and second inner surfaces (11a,11d,11c) is defined by a respective set of prisms (12a,12d,12c) arranged side by side.
